(19)

**Europäisches Patentamt**
**European Patent Office**
**Office européen des brevets**

(11) **EP 2 562 681 B1**

(12) **EUROPÄISCHE PATENTSCHRIFT**

(45) Veröffentlichungstag und Bekanntmachung des Hinweises auf die Patenterteilung:
**13.08.2014   Patentblatt 2014/33**

(51) Int Cl.:
***G06K 9/00*** *(2006.01)*

(21) Anmeldenummer: **11006957.2**

(22) Anmeldetag: **25.08.2011**

(54) **Objektverfolgungsverfahren für ein Kamerabasiertes Fahrerassistenzsystem**

Object tracking method for a camera-based driver assistance system

Procédé de suivi d'objet pour un système d'assistance du conducteur à caméra

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.02.2013   Patentblatt 2013/09**

(73) Patentinhaber: Delphi Technologies, Inc.
**Troy, Michigan 48007 (US)**

(72) Erfinder:
- **Meuter, Mirko Nicolas**
  **40699 Erkrath (DE)**
- **Nunn, Christian Markus**
  **42117 Wuppertal (DE)**
- **Müller, Dennis**
  **40699 Erkrath (DE)**
- **Görmer, Steffen M.**
  **42369 Wuppertal (DE)**

(74) Vertreter: **Robert, Vincent**
**Delphi France SAS**
**Bât. le Raspail - ZAC Paris Nord 2**
**22, avenue des Nations**
**CS 65059 Villepinte**
**95972 Roissy CDG Cedex (FR)**

(56) Entgegenhaltungen:
- **WEISS K ET AL: "Multiple-model tracking for the detection of lane change maneuvers", INTELLIGENT VEHICLES SYMPOSIUM, 2004 IEEE PARMA, ITALY JUNE 14-17, 2004, PISCATAWAY, NJ, USA,IEEE, 14. Juni 2004 (2004-06-14), Seiten 937-942, XP010727774, DOI: 10.1109/IVS.2004.1336511 ISBN: 978-0-7803-8310-4**

- **WEISS K ET AL: "Target modeling and dynamic classification for adaptive sensor data fusion", INTELLIGENT VEHICLES SYMPOSIUM, 2003. PROCEEDINGS. IEEE JUNE 9-11, 2003, PISCATAWAY, NJ, USA,IEEE, 9. Juni 2003 (2003-06-09), Seiten 132-137, XP010645863, ISBN: 978-0-7803-7848-3**
- **Yong-Shik Kim ET AL: International Journal of Control, Automation, and Systems, 1. September 2004 (2004-09-01), Seiten 310-318, XP55019617, Gefunden im Internet: URL:http://ijcas.com/ admin/paper/files/IJC AS_v2_n3_pp310-318.pdf [gefunden am 2012-02-16]**
- **AMDITIS A ET AL: "Multiple - sensor - collision avoidance system for automotive applications using an IMM approach for obstacle tracking", INFORMATION FUSION, 2002. PROCEEDINGS OF THE FIFTH INTERNATIONAL CONFE RENCE ON JULY 8-11, 2002, PISCATAWAY, NJ, USA, IEEE, Bd. 2, 8. Juli 2002 (2002-07-08), Seiten 812-817, XP010594274, ISBN: 978-0-9721844-1-0**
- **Aris Polychronopoulos ET AL: "Centralized data fusion for obstacle and road borders tracking in a collision warning system", Int. Conf. Inf. Fusion, 1. Juni 2004 (2004-06-01), XP55019785, Gefunden im Internet: URL:http://www.fusion2004.foi.se/ papers/IF 04-0760.pdf [gefunden am 2012-02-20]**
- **YING ZHU ET AL: "An integrated framework of vision-based vehicle detection with knowledge fusion", INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, PISCATAWAY, NJ, USA, 6. Juni 2005 (2005-06-06), Seiten 199-204, XP010833967, DOI: 10.1109/IVS.2005.1505102 ISBN: 978-0-7803-8961-8**

EP 2 562 681 B1

- **ADITYA KANITKAR ET AL: "Vision based preceding vehicle detection using self shadows and structural edge features", IMAGE INFORMATION PROCESSING (ICIIP), 2011 INTERNATIONAL CONFERENCE ON, IEEE, 3. November 2011 (2011-11-03), Seiten 1-6, XP032078295, DOI: 10.1109/ICIIP.2011.6108922 ISBN: 978-1-61284-859-4**
- **PONSA D ET AL: "3D vehicle sensor based on monocular vision", INTELLIGENT TRANSPORTATION SYSTEMS, 2005. PROCEEDINGS. 2005 IEEE VIENNA, AUSTRIA 13-16 SEPT. 2005, PISCATAWAY, NJ, USA,IEEE, 13. September 2005 (2005-09-13), Seiten 1096-1101, XP010843179, DOI: 10.1109/ITSC. 2005.1520204 ISBN: 978-0-7803-9215-1**
- **PONSA D ET AL: "Multiple vehicle 3D tracking using an unscented Kalman filter", INTELLIGENT TRANSPORTATION SYSTEMS, 2005. PROCEEDINGS. 2005 IEEE VIENNA, AUSTRIA 13-16 SEPT. 2005, PISCATAWAY, NJ, USA,IEEE, 13. September 2005 (2005-09-13), Seiten 1108-1113, XP010843181, DOI: 10.1109/ITSC. 2005.1520206 ISBN: 978-0-7803-9215-1**
- **DENNIS MULLER ET AL: "Time to contact estimation using interest points", INTELLIGENT TRANSPORTATION SYSTEMS, 2009. ITSC '09. 12TH INTERNATIONAL IEEE CONFERENCE ON, IEEE, PISCATAWAY, NJ, USA, 4. Oktober 2009 (2009-10-04), Seiten 1-6, XP031560115, ISBN: 978-1-4244-5519-5**
- **Hamidreza Azimian: "Visual Object Tracking Algorithms", Master Seminar, KNT University of Technology, 1. Januar 2005 (2005-01-01), XP55029141, Gefunden im Internet: URL:http:// saba.kntu.ac.ir/eecd/People/Azi myan/index_ files/files/A Survey in Visual Object Tracking Algorithms.pdf [gefunden am 2012-06-06]**

**Beschreibung**

Die Erfindung betrifft ein Objektverfolgungsverfahren für ein kamerabasiertes Fahrerassistenzsystem, welches eine in einem eigenen Fahrzeug installierte und in Fahrtrichtung ausgerichtete Kamera zur Aufnahme von Bildern einer in Fahrtrichtung vor dem eigenen Fahrzeug liegenden Fahrzeugumgebung aufweist, mit den Schritten, dass ein ein vorausfahrendes Fahrzeug darstellendes Objekt in einem von der Kamera aufgenommenen Bild detektiert wird und ein Mittelwert und eine Kovarianzmatrix für den aktuellen Zustand des vorausfahrenden Fahrzeugs mittels eines erweiterten Kalman Filters aus der Position und Breite des Objekts in dem Bild geschätzt wird.

Ein derartiges Verfahren ist grundsätzlich bekannt und beispielsweise in der Dissertation von Daniel Ponsa Mussarra (ISBN 978-84-935251-3-2) beschrieben. Dieses Verfahren leidet unter einem Beobachtungsproblem insofern, als das erweiterte Kalman Filter bei einer Geschwindigkeit des vorausfahrenden Fahrzeugs von v = 0 divergiert, so dass keine zuverlässige Zustandsschätzung möglich ist.

Grundsätzlich kann das Beobachtungsproblem dadurch umgangen werden, dass die Geschwindigkeit und/oder der Winkel des vorausfahrenden Fahrzeugs mittels zusätzlicher Sensoren direkt ermittelt werden. Solche Verfahren, welche auf einer Fusion unterschiedlicher Sensorausgaben beruhen, sind z.B. in den folgenden Aufsätzen angegeben:

Weiss et al.: "Multiple-model tracking for the detection of lane change maneuvers", Intelligent Vehicles Symposium, Parma, Italy, 14.-17. Juni, 2004, Seiten 937-942, ISBN 978-0-7803-8310-4;

Weiss et al.: "Target modeling and dynamic classification for adaptive sensor data fusion", Intelligent Vehicles Symposium, Piscataway, NJ, USA, 9.-11. Juni, 2003, Seiten 132-137, ISBN 978-0-7803-7848-3;

Yong-Shik Kim et al.: "An IMM Algorithm for Tracking Maneuvering Vehicles in an Adaptive Cruise Control Environment", International Journal of Control, Automation and Systems, 1. September 2004, Seiten 310-318; URL:http://ijcas.com/admin/paper/files/IJCAS_v2_n3_pp310-318.pdf;

Amditis et al.: "Multiple sensor collision avoidance system for automotive applications using an IMM approach for obstacle tracking", Proceedings of the fifth international conference on information fusion, Bd. 2, 8. Juli 2002, Seiten 812-817, ISBN: 978-0-9721844-1-0;

Aris Polychronopoulos et al.: "Centralized data fusion for obstacle and road borders tracking in a collision warning system", Proc. Int. Conf. Inf. Fusion, 1. Juni 2004; URL:http://www.fusion2004.foi.se/papers/IF04-0760.pdf.

Allerdings sind solche Fusionsverfahren mit einem hohen Aufwand verbunden.

Der Erfindung liegt deshalb die Aufgabe zugrunde, ein einfacheres und robusteres Objektverfolgungsverfahren zu schaffen, bei welchem insbesondere das genannte Beobachtungsproblem nicht auftritt.

Zur Lösung der Aufgabe ist ein Verfahren mit den Merkmalen des Anspruchs 1 vorgesehen.

Der Erfindung liegt der allgemeine Gedanke zugrunde, den Zustand eines vorausfahrenden Fahrzeugs nicht mit Hilfe eines einzigen erweiterten Kalman Filters zu schätzen, sondern stattdessen für die Zustandsschätzung auf zwei unterschiedliche erweiterte Kalman Filter zurückzugreifen. Durch den Einsatz unterschiedlicher Kalman Filter ist gewährleistet, dass zu jedem Zeitpunkt zumindest eines der Kalman Filter eine plausible Zustandsschätzung liefert.

Um sicherzustellen, dass eine plausible Zustandsschätzung auch tatsächlich als solche erkannt wird und für die weitere Nutzung durch das Fahrerassistenzsystem herangezogen wird, beispielsweise zur Bestimmung des Abstands zwischen dem vorausfahrenden Fahrzeug und dem eigenen Fahrzeug, werden die von dem ersten erweiterten Kalman Filter und dem zweiten erweiterten Kalman Filter ausgegebenen Zustandsschätzungen durch ein interagierendes Mehrmodellfilter miteinander kombiniert, und zwar gewichtet mit der jeweiligen Wahrscheinlichkeit, dass das jeweilige erweiterte Kalman Filter den Zustand am besten schätzt.

Das Ergebnis des interagierenden Mehrmodellfilters ist mit anderen Worten der wahrscheinlichkeitsgewichtete Mittelwert der von den erweiterten Kalman Filtern ausgegebenen Mittelwerte für den aktuellen Zustand des vorausfahrenden Fahrzeugs sowie die dazugehörige, ebenfalls wahrscheinlichkeitsgewichtete kombinierte Kovarianzmatrix.

Das interagierende Mehrmodellfilter bewirkt gewissermaßen also eine automatische Umschaltung zwischen den beiden Kalman Filtern und sorgt somit also dafür, dass sich letztlich immer die bessere der beiden Zustandsschätzungen durchsetzt und für die weitere Verwendung für das Fahrerassistenzsystem zum Zuge kommt.

Die Objektdetektion wird mittels des Adaboost-Kaskade-Verfahrens unabhängig von einem vorherigen Bild in einem nachfolgend aufgenommenen Bild erneut durchgeführt.

Erfindungsgemäß wird zusätzlich ein einmal detektiertes Objekt auch mittels eines optischen Trackings in Form eines Lukas-Kanade-Algorithmus über mehrere Bilder hinweg verfolgt, indem anhand von signifikanten Punkten im Bild eine Translation und eine Skalierung zwischen dem aktuellen Bild und mehreren vorhergehenden Bildern berechnet und dazu verwendet wird, eine Bounding Box aus dem jeweiligen vorhergehenden Bild in das aktuelle Bild umzurechnen. Grundsätzlich stellt optisches Tracking ein genaueres Verfahren zur Detektion bzw. Verfolgung eines Objekts in einer Abfolge von Bildern dar, als die von Bild zu Bild erneut durchgeführte Detektion eines Objekts. Allerdings ist optisches Tracking mit einem höheren Rechenaufwand verbunden und es besteht zusätzlich das Problem, dass das detektierte Objekt beispielsweise aufgrund von störenden Hintergrundmustern nach einer gewissen Zeit tatsächlich nicht mehr ein vorausfahrendes Fahrzeug darstellt sondern ein davon abweichendes Artefakt.

Gleichwohl sieht die Erfindung vor, einen dritten Mittelwert und eine dritte Kovarianzmatrix für den aktuellen Zustand des vorausfahrenden Fahrzeugs mittels eines dritten erweiterten Kalman Filters, welcher mit dem ersten erweiterten Kalman Filter identisch ist, aus der Position und Breite des mittels optischem Tracking verfolgten Objekts zu schätzen.

Der dritte Mittelwert sowie die dritte Kovarianzmatrix werden dann zusammen mit dem ersten und zweiten Mittelwert sowie der ersten und zweiten Kovarianzmatrix in dem interagierenden Mehrmodellfilter jeweils wahrscheinlichkeitsgewichtet miteinander kombiniert, um den kombinierten Mittelwert und die kombinierte Kovarianzmatrix für den aktuellen Zustand des vorausfahrenden Fahrzeugs zu bilden. Auf diese Weise geht die mittels optischem Tracking ermittelte Position und Breite eines Objekts in einem Bild mit einem höheren Gewicht in die Zustandsschätzung ein, solange das optische Tracking ein genaueres Detektionsergebnis liefert als die Detektion von Bild zu Bild, während das interagierende Mehrmodellfilter gleichzeitig als Regulativ wirkt und die Gewichtung des mittels optischem Tracking verfolgtem Objekts automatisch reduziert, wenn das optische Tracking divergiert, d.h. das verfolgte Objekt nicht mehr mit dem vorausfahrenden Fahrzeug übereinzustimmen droht.

Vorteilhafte Ausbildungen der Erfindung sind den Unteransprüchen, der Beschreibung und der Zeichnung zu entnehmen.

Gemäß einer Ausführungsform verwendet das erste erweiterte Kalman Filter nichtlineare Übergangs- und Beobachtungsmatrizen, während das zweite erweiterte Kalman Filter eine lineare Übergangsmatrix und eine nichtlineare Beobachtungsmatrix verwendet. Dadurch, dass in dem zweiten erweiterten Kalman Filter eine lineare Übergangsmatrix zum Einsatz kommt, liefert das zweite erweiterte Kalman Filter tendenziell zwar eine etwas ungenauere Zustandsschätzung als das erste erweiterte Kalman Filter. Gleichzeitig wird hierdurch aber sichergestellt, dass das zweite erweiterte Kalman Filter selbst dann eine plausible Zustandsschätzung liefert, wenn bei dem ersten erweiterten Kalman Filter ein Beobachtungsproblem auftritt, d.h. das erste Kalman Filter divergiert. Das interagierende Mehrmodellfilter gibt in diesem Fall automatisch die etwas ungenauere, aber dafür plausible Zustandsschätzung des zweiten erweiterten Kalman Filters als kombinierte Zustandsschätzung aus, welche in dem nächsten Schätzschritt in das erste erweiterte Kalman Filter einfließt und diesen zurück zur Konvergenz führt, wodurch das Beobachtungsproblem überwunden wird.

Zur möglichst genauen Schätzung des Zustands des vorausfahrenden Fahrzeugs modellieren die den Übergangsmatrizen der erweiterten Kalman Filter zugrunde liegenden Bewegungsmodelle die Bewegungen des eigenen Fahrzeugs und des vorausfahrenden Fahrzeugs bevorzugt als Kreisfahrten.

Dabei kann in dem der Übergangsmatrix des zweiten erweiterten Kalman Filters zugrunde liegenden linearen Bewegungsmodell vereinfachend angenommen werden, dass sich das vorausfahrende Fahrzeug und das eigene Fahrzeug unter einem konstanten Winkel $\varphi = 0$ und unter einer konstanten Winkeländerung $\dot{\varphi} = 0$ relativ zueinander bewegen. Hierdurch lässt sich auf besonders einfache und wirksame Weise das Auftreten eines Beobachtungsproblems in dem zweiten erweiterten Kalman Filter verhindern.

Bevorzugt schätzen die erweiterten Kalman Filter zumindest die Position des vorausfahrenden Fahrzeugs in einer Bodenebene in Weltkoordinaten, die Geschwindigkeit des vorausfahrenden Fahrzeugs in der Bodenebene, die Winkeldifferenz zwischen den Fahrtrichtungen des vorausfahrenden Fahrzeugs und des eigenen Fahrzeugs, die Winkelgeschwindigkeit des vorausfahrenden Fahrzeugs und den Winkel zwischen der optischen Achse der Kamera und der Bodenebene, d.h. den Nickwinkel des eigenen Fahrzeugs. Zusammengenommen bilden diese Parameter den geschätzten Zustand des vorausfahrenden Fahrzeugs, genauer gesagt bilden diese Parameter die Komponenten der durch die erweiterten Kalman Filter geschätzten Zustandsvektoren.

Dabei ist unter der Position des vorausfahrenden Fahrzeugs in diesem Kontext der Fußpunkt des vorausfahrenden Fahrzeugs zu verstehen, d.h. die Projektion des Mittelpunkts der Hinterachse des vorausfahrenden Fahrzeugs in die Bodenebene. In einem von der Kamera aufgenommenen Bild entspricht dieser Punkt dem Mittelpunkt der Unterseite einer so genannten Bounding Box, welche das das vorausfahrende Fahrzeug darstellende Objekt umgibt.

Vorteilhafterweise beruhen die Beobachtungsmatrizen der erweiterten Kalman Filter jeweils auf einem Lochkameramodell, d.h. die Projektion eines Punktes in Weltkoordinaten in die Bildebene der Kamera wird mittels eines Lochkameramodells berechnet.

Gemäß einer weiteren Ausführungsform wird die Position des vorausfahrenden Fahrzeugs aus einer angenommenen Breite des vorausfahrenden Fahrzeugs sowie der Position und Breite des entsprechenden Objekts im Bild ermittelt.

Die angenommene Breite des vorausfahrenden Fahrzeugs wird bevorzugt durch Klassifizierung des Objekts ermittelt. Dabei kann die Klassifizierung durch Mustererkennung und/oder durch Abgleich des Objekts mit Musterobjekten erfolgen, die in einer Objektdatenbank hinterlegt sind.

Vorteilhafterweise erfolgt die Klassifizierung durch Zuordnung des Objekts einer von mindestens zwei vorbestimmten Klassen mit einer jeweiligen Zugehörigkeitswahrscheinlichkeit. Bei den vorbestimmten Klassen kann es sich beispielsweise um die Fahrzeugklassen Pkw, Kleintransporter (Van) und Lkw (Truck) handeln.

Die bei der Ermittlung der Position des vorausfahrenden Fahrzeugs zum Einsatz kommende angenommene Breite des vorausfahrenden Fahrzeugs ist vorteilhafterweise die Summe der Produkte aus der einer Klasse zugeordneten durchschnittlichen Fahrzeugbreite und der jeweiligen Zugehörigkeitswahrscheinlichkeit. Mit anderen Worten fließt in die angenommene Breite des vorausfahrenden Fahrzeugs die Erfahrung ein, dass die Fahrzeuge einer Klasse, beispielsweise Pkws, normalerweise - innerhalb gewisser Grenzen - eine typische Breite aufweisen. Diese typischen Breiten werden dann zusätzlich mit der Wahrscheinlichkeit gewichtet, dass es sich bei dem vorausfahrenden Fahrzeug tatsächlich um ein Fahrzeug dieser Klasse handelt, wobei diese Wahrscheinlichkeit anhand von charakteristischen Merkmalen ausgemacht wird, die Fahrzeuge der jeweiligen Klasse üblicherweise aufweisen, wie z.B. Fahrzeughöhe, Form und Lage von Fahrzeugleuchten, etc.

Weiterer Gegenstand der Erfindung ist ein Fahrzeug mit einer in Fahrtrichtung ausgerichteten Kamera zur Aufnahme von Bildern einer in Fahrtrichtung vor dem Fahrzeug liegenden Fahrzeugumgebung und einer Einheit zur Auswertung der von der Kamera aufgenommenen Bilder, wobei die Auswerteeinheit eingerichtet ist, um das voranstehend beschriebene Verfahren auszuführen.

Nachfolgend wird die Erfindung rein beispielhaft anhand möglicher Ausführungsformen unter Bezugnahme auf die beigefügte Zeichnung beschrieben. Es zeigen:

Fig. 1 eine schematische Darstellung des erfindungsgemäßen Verfahrens gemäß einer ersten Ausführungsform;

Fig. 2 ein Kamerabild mit einem ein vorausfahrendes Fahrzeug darstellenden Objekt;

Fig. 3 eine schematische Darstellung des erfindungsgemäßen Verfahrens gemäß einer zweiten Ausführungsform;

Fig. 4 eine schematische Darstellung der Überlagerung von Bounding Boxen bei dem Verfahren von Fig. 3.

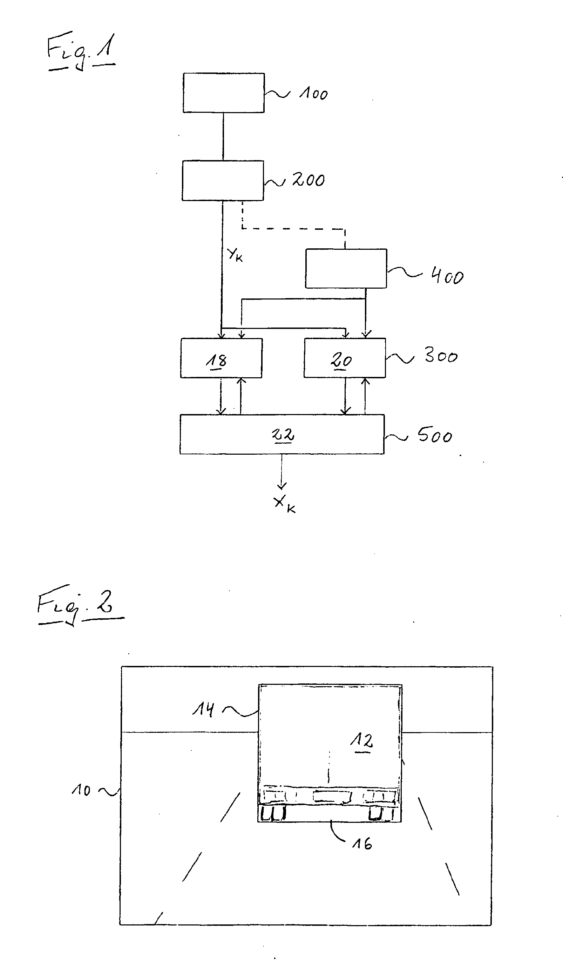

In Fig. 1 ist der Ablauf eines Objektverfolgungsverfahrens gemäß einer ersten Ausführungsform dargestellt, welches von einem kamerabasierten Fahrerassistenzsystem eines Fahrzeugs ausgeführt wird.

Mittels einer in dem Fahrzeug installierten und in Fahrtrichtung ausgerichteten Kamera wird ein Bild 10 (Fig. 2) der vor dem Fahrzeug liegenden Fahrzeugumgebung aufgenommen (Schritt 100).

In dem aufgenommenen Bild 10 wird mittels eines geeigneten Algorithmus ein Objekt 12 detektiert (Schritt 200), welches einem vorausfahrenden Fahrzeug, auch Zielfahrzeug genannt, entspricht. Die Objektdetektion kann beispielsweise mittels eines Adaboost-Kaskade-Algorithmus erfolgen.

Wie Fig. 2 zeigt wird das detektierte Objekt 12 durch einen Rahmen, eine sogenannte Bounding Box 14, eingefasst, und die Lage und Größe des Objekts 12 im Bild 10 wird durch den Mittelpunkt 16 der Unterseite der Bounding Box 14, den sogenannten Fußpunkt ($p_{ix}$, $p_{iy}$), sowie durch die Breite $p_{ib}$ der Bounding Box 14 definiert.

In einem k-ten Zeitschritt bilden die Position des Fußpunktes ($p_{ix,k}$, $p_{iy,k}$) und die Breite $p_{ib,k}$ des detektierten Objekts zusammen einen Messvektor

$$y_k = [p_{ix,k} \quad p_{iy,k} \quad p_{ib,k}]^T.$$

Dieser Messvektor $y_k$ wird sowohl einem ersten erweiterten Kalman Filter 18 als auch einem zweiten erweiterten Kalman Filter 20 zugeführt, welche parallel zueinander aus dem Messvektor $y_k$ jeweils den Zustand des vorausfahrenden Fahrzeugs, genauer gesagt einen Zustandsvektor $x_k$ und eine dazugehörige Kovarianzmatrix, schätzen (Schritt 300).

Das erste Kalman Filter 18 arbeitet mit einer Übergangsmatrix, der ein Bewegungsmodell zugrunde liegt, bei dem die Bewegungen sowohl des Zielfahrzeugs, d.h. des vorausfahrenden Fahrzeugs, als auch des eigenen Fahrzeugs als Kreisbewegung modelliert werden. Für die Beschreibung der Bewegung des Zielfahrzeugs relativ zur Bewegung des eigenen Fahrzeugs, gekennzeichnet durch den Index e, werden die folgenden Differentialgleichungen gewählt

$$\dot{p}_{wx} = v(t)\cos(\varphi(t)) - v_e \qquad (1)$$

$$\dot{p}_{wy} = v(t)\sin(\varphi(t)) \qquad (2)$$

$$\dot{v} = a \qquad (3)$$

$$\dot{\varphi} = \phi(t) - \phi_e(t) \tag{4}$$

$$\dot{\phi} = \omega \tag{5}$$

$$\dot{\alpha} = \gamma \tag{6}$$

wobei $p_{wx}$ und $p_{wy}$ die Position des Fahrzeugs auf einer Bodenebene bezeichnen und $\alpha$ den Nickwinkel der Kamera zu dieser Ebene bezeichnet. $v$ bezeichnet die Geschwindigkeit des vorausfahrenden Fahrzeugs, $v_e$ die Geschwindigkeit des eigenen Fahrzeuges, $\varphi$ die Winkeldifferenz zwischen den Fahrtrichtungen des eigenen Fahrzeugs und des vorausfahrenden Fahrzeuges, $\phi$ die Winkelgeschwindigkeit des vorausgefahrenen Fahrzeugs und $\phi_e$ die Winkelgeschwindigkeit des eigenen Fahrzeugs.

Die Änderungen a, $\omega$ und y der Geschwindigkeit $v$, der Winkelgeschwindigkeit $\phi$ und des Winkeloffsets $\alpha$ werden als additives Rauschen modelliert, so dass der zu schätzende Zustandsvektor $x_k$ definiert werden kann als

$$x_k = [p_{wx,k} \quad p_{wy,k} \quad v_k \quad \varphi_k \quad \phi_k \quad \alpha_k].$$

Durch eine Integration der voranstehenden Differentialgleichungen (1) bis (6) erhält man die folgenden diskreten, nichtlinearen Systemgleichungen

$$p_{wx,k} = p_{wx,t-1} + v_{k-1}t_d \cos(\varphi_{k-1}) - \frac{v_{k-1}t_d^2}{2}(\phi_{k-1} - \phi_{e,k-1})\sin(\varphi_{k-1}) - v_{e,k-1}t_d \tag{7}$$

$$p_{wy,k} = p_{wy,t-1} + v_{k-1}t_d \sin(\varphi_{k-1}) - \frac{v_{k-1}t_d^2}{2}(\phi_{k-1} - \phi_{e,k-1})\cos(\varphi_{k-1}) \tag{8}$$

$$v_{\varphi,k} = v_{\varphi,k-1} \tag{9}$$

$$\varphi_k = \varphi_{k-1} + (\phi_{k-1} - \phi_{e,k-1})t_d \tag{10}$$

$$\phi_k = \phi_{k-1} \tag{11}$$

$$\alpha_k = \alpha_{k-1}, \tag{12}$$

wobei zur Herleitung dieser Gleichungen einer Taylorerweiterung zweiter Ordnung um

$$(t_d\phi_{k-1} - t_d\phi_{e,k-1}) = 0 \tag{13}$$

eingesetzt wurde. $t_d$ bezeichnet hierbei die Zeitdifferenz zwischen zwei Zeitschritten.

Als Modell für die Abbildungsfunktion eines Objekts aus dem Weltkoordinationssystem in das Bildkoordinationssystem wird ein Lochkameramodell verwendet.

Es sei $p_w = [w_x\ w_y\ w_z\ 1]^T$ ein Punkt im Weltkoordinatensystem repräsentiert mit Hilfe von homogenen Koordinaten. Dabei ist das Weltkoordinatensystem so definiert, dass der Ursprung in der Kamera liegt und die x-Achse parallel zur horizontalen Querachse, die y-Achse parallel zur Längsachse und die z-Achse parallel zur vertikalen Querachse des eigenen Fahrzeugs verläuft.

Weiterhin sei $pi = [i_x\ i_y\ 1]^T$ die Abbildung des Punktes $p_w$ im Bildkoordinatensystem, ebenfalls repräsentiert durch homogene Koordinaten. Mit Hilfe des Lochkameramodells und ohne Berücksichtigung von Verzerrungen lässt sich der Zusammenhang zwischen dem Punkt $p_i$ im Bild und dem Punkt $p_w$ in der Welt mathematisch über

$$p_i = Hp_w \qquad (14)$$

beschreiben. Hierbei ist H eine Lochkameramodellmatrix, die das Produkt aus einer intrinsischen Kalibrationsmatrix, welche die Kameraparameter enthält, wie z.B. die Fokuslänge und die Pixelgröße, und einer Matrix mit extrinsischen Parametern umfasst.

Zur Bestimmung der Parameter K der Lochkameramodellmatrix wird üblicherweise ein bekanntes Testmuster unter verschiedenen Winkeln abgebildet und mit Hilfe eines Schätz- oder Optimierungsansatzes die optimalen intrinsischen Parameter gesucht. Mit Hilfe der intrinsischen Kalibrierung können anschließend die extrinsischen Parameter durch Messung der Kameraposition und der Orientierung bezüglich des definierten Weltkoordinationssystems oder automatisch mit Hilfe eines Optimierungs- oder Schätzansatzes unter Zuhilfenahme eines bekannten Musters mit definierten Positionen im Weltkoordinatensystem bestimmt werden.

Die Projektion eines Punktes mit den Weltkoordinaten $p_{wx}$, $p_{wy}$ und $p_{wz}$ auf einen Punkt in der Bildebene mit den Bildkoordinaten $p_{ix}$ und $p_{iy}$ lässt sich bei dem Lochkameramodell also über

$$p_{ix} = h_x(p_{wx}, p_{wy}, p_{wz}) = \frac{K_{11}p_{wx} + K_{12}p_{wy} + K_{13}p_{wz} + K_{14}}{K_{31}p_{wx} + K_{32}p_{wy} + K_{33}p_{wz} + K_{34}} \qquad (15)$$

$$p_{iy} = h_y(p_{wx}, p_{wy}, p_{wz}) = \frac{K_{21}p_{wx} + K_{22}p_{wy} + K_{23}p_{wz} + K_{24}}{K_{31}p_{wx} + K_{32}p_{wy} + K_{33}p_{wz} + K_{34}} \qquad (16)$$

berechnen.

Aufgrund der unbekannten Distanzkomponente $p_{wy}$ lässt sich umgekehrt zu einem Punkt im Bild nur eine Sichtgerade in der Welt bestimmen, sofern die Distanz nicht aufgrund von Nebenbedingungen eingeschränkt werden kann.

Bei der Rückprojektion des Fußpunktes ($p_{ix}$, $p_{ix}$) aus Bildkoordinaten in Weltkoordinaten werden kleine Winkelabweichungen $\alpha$ zur Grundebene angenommen, die z.B. aufgrund von Nickbewegungen der Kamera auftreten können, so dass für die $w_x$ - und $w_z$ -Positionen des in die Bodenebene rückprojizierten Fußpunktes vereinfachend gilt:

$$w_x = p_{wx}\cos(\alpha) \approx p_{wx} \qquad (17)$$

$$w_z = p_{wx}\sin(\alpha) \approx p_{wx}\alpha \qquad (18)$$

Des Weiteren wird angenommen, dass man die Rückseite des vorausfahrenden Fahrzeugs unter kleinen Winkeln von hinten sieht. Die Breite des vorausfahrenden Fahrzeugs kann deshalb als Differenz zweier rückprojizierter Punkte mit einer y-Position von $\pm \dfrac{w_b}{2}$ modelliert werden, wobei $w_b$ eine angenommene Breite des vorausfahrenden Fahrzeugs ist, welche durch Klassifizierung des Fahrzeugs gewonnen wird, wie nachfolgend näher erläutert wird. Für die Breiten $p_{ib}$ und $w_b$ gilt daher folgender Zusammenhang

$$p_{ib} = h_x\left(p_{wx}, p_{wy} + \frac{w_b}{2}, p_{wx}\alpha\right) - h_x\left(p_{wx}, p_{wy} - \frac{w_b}{2}, p_{wx}\alpha\right). \qquad (19)$$

Unter der Annahme, dass der Abstand der linken und der rechten Seite des vorausfahrenden Fahrzeugs ungefähr gleich ist, d.h. dass der Nenner und damit die Distanz von Mittelpunkt und linker und rechter Seite ungefähr identisch ist, lässt sich Gleichung (19) unter Einsatz der Gleichungen (15) und (16) zu

$$p_{ib} = \frac{K_{12}w_b}{K_{31}p_{wx} + K_{32}p_{wy} + K_{33}p_{wz} + K_{34}} \qquad (20)$$

vereinfachen.

Für die Ermittlung der angenommenen Breite $w_b$ des vorausfahrenden Fahrzeugs, wird das vorausfahrende Fahrzeug durch geeignete Mustererkennung oder Vergleich geeigneter charakteristischer Merkmale mit in einer Datenbank hinterlegten Fahrzeugmustern mit einer gewissen Zugehörigkeitswahrscheinlichkeit einer von drei Fahrzeugklassen zugeordnet, nämlich Pkw, Kleintransporter und Lkw (Schritt 400).

Zu jeder dieser drei Klassen ist eine Standardbreite definiert, nämlich $b_c$ für Pkw, $b_v$ für Kleintransporter und bt für Lkw, die anhand von Fahrzeugen des entsprechenden Typs verschiedener Hersteller empirisch ermittelt wurden.

Die Klassifikation des vorausfahrenden Fahrzeugs liefert zu jeder dieser Fahrzeugklassen eine Zugehörigkeitswahrscheinlichkeit $w_c$, $w_v$ und $w_t$, die für die Standardbreiten $b_c$, $b_v$ und $b_t$ definiert werden. Durch Summation der Produkte aus den Standardbreiten und ihren jeweiligen Zugehörigkeitswahrscheinlichkeiten wird die angenommene Breite $w_b$ in jedem Zeitschritt über

$$w_b = w_c b_c + w_v b_v + w_t b_t \qquad (21)$$

berechnet, wobei die Zugehörigkeitswahrscheinlichkeiten so normiert werden, dass sie in Summe immer 1 ergeben.

In Kenntnis der angenommenen Breite $w_b$ des vorausfahrenden Fahrzeugs und der Breite $p_{ib}$ des entsprechenden Objekts 12 im Kamerabild 10 lässt sich dann aus Gleichung (20), d.h. also letztlich durch Triangulation, die Distanz des vorausfahrenden Fahrzeugs zu dem eigenen Fahrzeug ermitteln.

Wie aus den Gleichungen (7) und (8) ersichtlich ist, kann bei dem ersten Kalman Filter 18 ein Beobachtungsproblem auftreten, wenn die Geschwindigkeit v des vorausfahrenden Fahrzeugs fälschlicherweise als zu niedrig eingeschätzt wird. In diesem Fall fangen die Geschwindigkeits- und die Winkel- und Winkeländerungsschätzungen an zu divergieren. Intuitiv ist klar, dass eine Winkel- und Winkeländerungsschätzung aufgrund von Positionsdaten nur mit einer ausreichend großen Geschwindigkeit möglich ist und umgekehrt eine Geschwindigkeitsschätzung nur bei einem bekannten Winkel möglich ist. Wie Experimente bestätigt haben, tritt dieses Problem auch bei einer Filterung mit einem Unscented Kalman Filter auf.

Um dieses Problem zu lösen, arbeitet das zweite erweiterte Kalman Filter 20 mit einer Übergangsmatrix, dem ein Bewegungsmodell mit linearen Bewegungsgleichungen zugrunde liegt, bei dem genauer gesagt der Winkel $\varphi = 0$ und die Winkeländerungen $\phi = \phi_e = 0$ als konstant vorgegeben werden. Kleinere vertikale Bewegungen werden bei diesem Filter durch hohes Positionsrauschen in y-Richtung modelliert. Größere Querbewegungen müssen nicht berücksichtigt werden, da bei der vorliegenden Anwendung nur Heckansichten erkannt werden und daher mit solchen Bewegungen nicht zu rechnen ist.

Das zweite erweiterte Kalman Filter 20 liefert eine zweite Schätzung des Zustands des vorausfahrenden Fahrzeugs, d.h. einen zweiten Zustandsvektor $x_k$ und eine dazugehörige Kovarianzmatrix, die tendenziell zwar etwas ungenauer als die Schätzung des ersten Kalman Filters 18 ist. Dafür ist durch das vereinfachte Bewegungsmodell aber sichergestellt, dass selbst dann ein plausibles Schätzergebnis geliefert wird, wenn das erste Kalman Filter 18 aufgrund des genannten Beobachtungsproblems versagt.

Die von den parallel arbeitenden Kalman Filtern 18, 20 gelieferten Zustandsschätzungen werden einem Interagierendes Mehrmodellfilter (IMM-Filter 22) zugeführt (Schritt 500), welches in jedem Zeitschritt das jeweils bessere Modell auswählt oder die gelieferten Zustandsschätzungen geeignet gewichtet miteinander kombiniert, so dass eine ständige Stabilisierung des auf dem nichtlinearen Bewegungsmodell basierenden ersten Kalman Filters 18 mit Hilfe des auf dem linearen Bewegungsmodell basierenden zweiten Kalman Filters 20 erfolgt. Das IMM-Filter 22 sorgt nach Art von Ockhams Messer gewissermaßen also für eine automatische Modellumschaltung.

Die von dem IMM-Filter 22 ausgegebene kombinierte Schätzung wird dem Fahrerassistenzsystem zur weiteren Nutzung zur Verfügung gestellt. Außerdem findet eine Rückkopplung der kombinierten Schätzung an die Kalman Filter 18, 20 statt, damit diese die kombinierte Schätzung des IMM-Filters 22 bei der nächsten Zustandsschätzung berücksichtigen können.

Gemäß der in Fig. 1 dargestellten Ausführungsform erfolgt die Detektion eines ein vorausfahrendes Fahrzeug darstellenden Objekts 12 im Kamerabild 10 mittels Vergleich mit Musterobjekten, die in einer Objektdatenbank hinterlegt sind, beispielsweise mittels eines Adaboost-Kaskade-Verfahrens. Dabei wird die Objektdetektion (Schritt 200) in jedem Kamerabild bzw. in jedem Zeitschritt erneut durchgeführt.

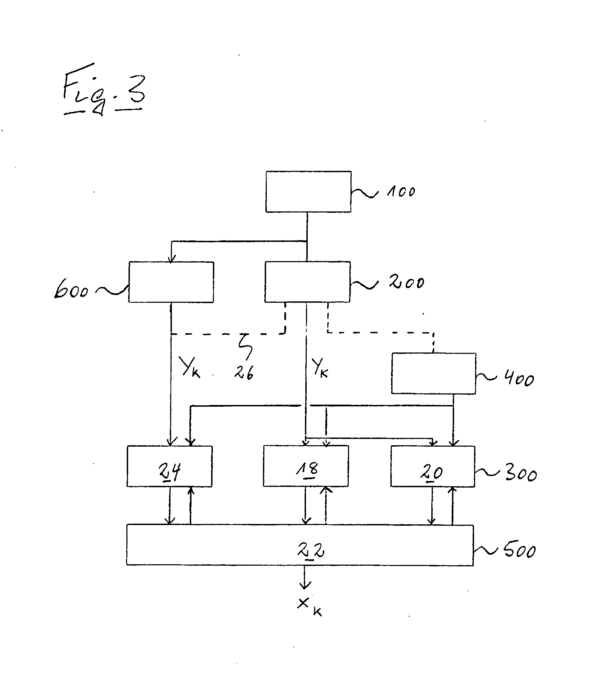

In Fig. 3 ist eine zweite Ausführungsform dargestellt, bei welcher ein einmal detektiertes Objekt 12 zusätzlich mittels eines optischen Tracking-Algorithmus, wie beispielsweise eines Lukas-Kanade-Algorithmus, über mehrere Bilder hinweg verfolgt wird (Schritt 600).

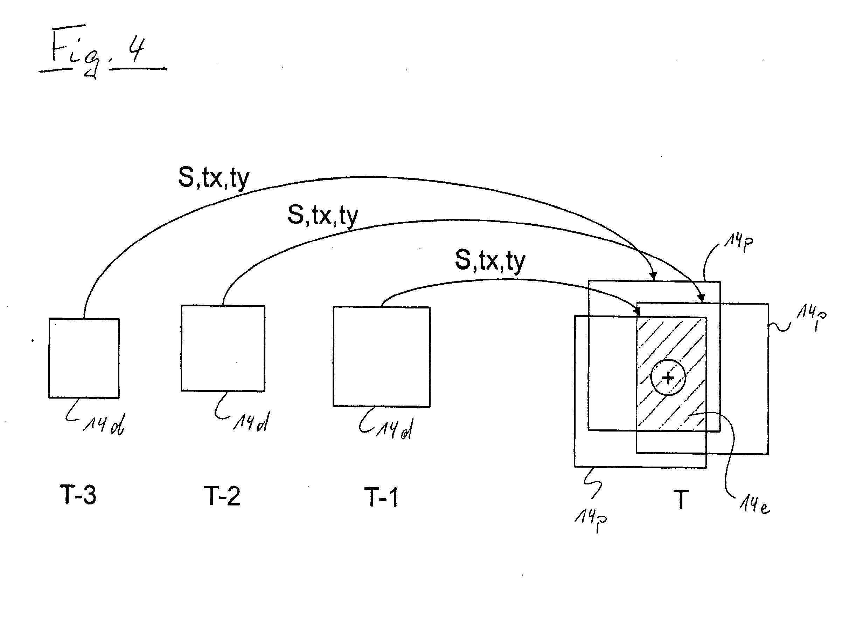

Konkret werden anhand von signifikanten Punkten im Bild, sogenannten Points of Interest, wie beispielsweise Eckpunkten von Objekten, die Translation tx, ty und die Skalierung S zwischen dem aktuellen Bild und mehreren vorhergehenden Bildern berechnet. Wie in Fig. 4 gezeigt ist, werden die berechneten Translationen tx, ty und Skalierungen S dazu verwendet, eine Bounding Box 14d aus dem jeweiligen vorhergehenden Bild in das aktuelle Bild umzurechnen, gewissermaßen also eine aktuelle Bounding Box 14p zu prognostizieren. Dabei sollten zur Vermeidung von Fehlerfortpflanzung als Grundlage für die Umrechnung möglichst durch Detektion ermittelte Bounding Boxen 14d herangezogen werden.

Aus den in das aktuelle Bild prognostizierten Bounding Boxen 14p wird durch gewichtete Überlagerung eine Ergebnisbox 14e ermittelt. Dabei kann die Überlagerung durch gleichgewichtete Summierung der Boxparameter, insbesondere von Lage und Breite der jeweiligen Box, oder durch gewichtete Summierung der Boxparameter erfolgen, wobei die Gewichte mittels Annahmen über die Boxverteilung und mittels einer robusten Schätzung, d.h. unter Nichtbeachtung von Ausreißern, bestimmt werden.

Die so in jedem Zeitschritt ermittelte Ergebnisbox 14e, d.h. also Lage und Breite des verfolgten Objekts 12, wird wie in Fig. 3 gezeigt einem dritten erweiterten Kalman Filter 24 zugeführt. Optional kann die Ergebnisbox 14e dabei mit einer Bounding Box 14 fusioniert werden, welche in Schritt 200 durch Detektion im aktuellen Bild ermittelt wurde (angedeutet durch die gestrichelte Linie 26 in Fig. 3).

Das dritte erweiterte Kalman Filter 24 ist mit dem ersten Kalman Filter 18 identisch und liefert parallel zu dem ersten und zweiten Kalman Filter 18, 20 eine dritte Zustandsschätzung.

Zusammen mit dem ersten und zweiten Schätzergebnis wird das dritte Schätzergebnis ebenfalls dem IMM-Filter 22 zugeführt, welches in jedem Zeitschritt das jeweils beste Modell auswählt oder die Modelle geeignet gewichtet kombiniert, um eine kombinierte Schätzung für den aktuellen Zustand des vorausfahrenden Fahrzeugs und insbesondere für den Abstand des vorausfahrenden Fahrzeuges zum eigenen Fahrzeug auszugeben. Die kombinierte Schätzung wird auch hier dem Fahrerassistenzsystem zur weiteren Verarbeitung zur Verfügung gestellt und außerdem den Kalman Filtern 18, 20 24 für die Zustandsschätzung im nächsten Zeitschritt zugeführt.

## Patentansprüche

1. Objektverfolgungsverfahren für ein kamerabasiertes Fahrerassistenzsystem, welches eine in einem eigenen Fahrzeug installierte und in Fahrtrichtung ausgerichtete Kamera zur Aufnahme von Bildern (10) einer in Fahrtrichtung vor dem eigenen Fahrzeug liegenden Fahrzeugumgebung aufweist, mit den Schritten, dass

   a) mittels eines Adaboost-Kaskade-Verfahrens ein ein vorausfahrendes Fahrzeug darstellendes Objekt (12) in einem von der Kamera aufgenommenen Bild (10) detektiert wird (200), wobei ein Fußpunkt ($p_{ix}$, $p_{iy}$) und eine Breite ($p_{ib}$) einer das detektierte Objekt (12) in dem Bild (10) einfassenden Bounding Box (14) als Position und Breite des Objekts (12) in dem Bild (10) definiert werden;
   b) ein erster Mittelwert und eine erste Kovarianzmatrix für den aktuellen Zustand des vorausfahrenden Fahrzeugs mittels eines ersten erweiterten Kalman Filters (18) aus der definierten Position und Breite des Objekts (12) in dem Bild (10) geschätzt wird (300);

c) zusätzlich ein zweiter Mittelwert und eine zweite Kovarianzmatrix für den aktuellen Zustand des vorausfahrenden Fahrzeugs mittels eines von dem ersten erweiterten Kalman Filter (18) verschiedenen zweiten erweiterten Kalman Filters (20) aus der definierten Position und Breite des Objekts (12) in dem Bild (10) geschätzt wird (300),

wobei das erste erweiterte Kalman Filter (18) mit einer Übergangsmatrix arbeitet, der ein Bewegungsmodell zugrunde liegt, bei dem die Bewegungen des vorausfahrenden Fahrzeugs und des eigenen Fahrzeugs als Kreisbewegung modelliert werden, und das zweite erweiterte Kalman Filter (20) mit einer Übergangsmatrix arbeitet, der ein Bewegungsmodell mit linearen Bewegungsgleichungen zugrunde liegt; und

d) die Objektdetektion mittels des Adaboost-Kaskade-Verfahrens unabhängig von einem vorherigen Bild (10) in einem nachfolgend aufgenommenen Bild (10) erneut durchgeführt wird,

**dadurch gekennzeichnet, dass**

zusätzlich ein einmal detektiertes Objekt (12) mittels eines optischen Trackings in Form eines Lukas-Kanade-Algorithmus über mehrere Bilder (10) hinweg verfolgt wird, indem anhand von signifikanten Punkten im Bild (10) eine Translation (tx, ty) und eine Skalierung (S) zwischen dem aktuellen Bild (10) und mehreren vorhergehenden Bildern berechnet und dazu verwendet wird, eine Bounding Box (14d) aus dem jeweiligen vorhergehenden Bild in das aktuelle Bild (10) umzurechnen;

ein dritter Mittelwert und eine dritte Kovarianzmatrix für den aktuellen Zustand des vorausfahrenden Fahrzeugs mittels eines dritten erweiterten Kalman Filters (24), welcher mit dem ersten erweiterten Kalman Filter (18) identisch ist, aus der Position ($p_{ix}$, $p_{iy}$) und Breite ($p_{ib}$) des mittels optischem Tracking verfolgten Objekts (12) geschätzt wird; und

der erste, zweite und dritte Mittelwert sowie die erste, zweite und dritte Kovarianzmatrix mittels eines interagierenden Mehrmodellfilters (22) jeweils wahrscheinlichkeitsgewichtet miteinander kombiniert werden, um einen kombinierten Mittelwert und eine kombinierte Kovarianzmatrix für den aktuellen Zustand des vorausfahrenden Fahrzeugs zu bilden.

2. Verfahren nach Anspruch 1,
**dadurch gekennzeichnet , dass**
das erste erweiterte Kalman Filter (18) nichtlineare Übergangs- und Beobachtungsmatrizen verwendet und das zweite erweiterte Kalman Filter (20) eine lineare Übergangsmatrix und eine nichtlineare Beobachtungsmatrix verwendet.

3. Verfahren nach einem der vorherigen Ansprüche,
**dadurch gekennzeichnet, dass**
die Kalman Filter (18, 20) zumindest die Position des vorausfahrenden Fahrzeugs in einer Bodenebene in Weltkoordinaten, die Geschwindigkeit des vorausfahrenden Fahrzeugs in der Bodenebene, die Winkeldifferenz zwischen den Fahrtrichtungen des vorausfahrenden Fahrzeugs und des eigenen Fahrzeugs, die Winkelgeschwindigkeit des vorausfahrenden Fahrzeugs und den Winkel zwischen der optischen Achse der Kamera und der Bodenebene schätzen.

4. Verfahren nach einem der vorherigen Ansprüche,
**dadurch gekennzeichnet, dass**
die Position des vorausfahrenden Fahrzeugs aus einer angenommenen Breite ($w_b$) des vorausfahrenden Fahrzeugs sowie der Position ($p_{ix}$, $p_{iy}$) und Breite ($p_{ib}$) des entsprechenden Objekts (12) im Bild (10) ermittelt wird.

5. Verfahren nach Anspruch 6,
**dadurch gekennzeichnet, dass**
die angenommene Breite ($w_b$) des vorausfahrenden Fahrzeugs durch Klassifizierung des Objekts (12) ermittelt wird

6. Verfahren nach Anspruch 7,
**dadurch gekennzeichnet, dass**
die Klassifizierung durch Mustererkennung und/oder durch Abgleich des Objekts (12) mit Musterobjekten erfolgt, die in einer Objektdatenbank hinterlegt sind.

7. Verfahren nach Anspruch 7 oder 8,
**dadurch gekennzeichnet, dass**
die Klassifizierung durch Zuordnung des Objekts (12) einer von mindestens zwei vorbestimmten Klassen mit einer jeweiligen Zugehörigkeitswahrscheinlichkeit erfolgt.

**8.** Verfahren nach Anspruch 9,
**dadurch gekennzeichnet, dass**
die angenommene Breite ($w_b$) des vorausfahrenden Fahrzeugs die Summe der Produkte aus der einer Klasse zugeordneten durchschnittlichen Fahrzeugbreite und der jeweiligen Zugehörigkeitswahrscheinlichkeit ist.

**9.** Fahrzeug mit einer in Fahrtrichtung ausgerichteten Kamera zur Aufnahme von Bildern (10) einer in Fahrtrichtung vor dem Fahrzeug liegenden Fahrzeugumgebung und einer Einheit zur Auswertung der von der Kamera aufgenommenen Bilder (10), wobei die Auswerteeinheit eingerichtet ist, um das Verfahren nach einem der vorherigen Ansprüche auszuführen.

**Claims**

**1.** Object tracking method for a camera-based driver assistance system having a camera installed in its own vehicle and oriented in the direction of travel for taking images (10) of a vehicle environment in front of the own vehicle in the direction of travel, comprising the steps that

a) an object (12) representative of a preceding vehicle is detected (200) using a Adaboost cascade method in an image (10) captured by the camera, wherein a base point ($p_{ix}$, $p_{iy}$) and a width ($p_{ib}$) of a bounding box (14) bordering the detected object (12) in the image (10) are defined as position and width of the object (12) in the image (10);
b) a first mean value and a first covariance matrix for the current state of the preceding vehicle are estimated (300) using a first extended Kalman filter (18) from the defined position and width of the object (12) in the image (10);
c) in addition, a second mean value and a second covariance matrix for the current state of the preceding vehicle are estimated (300) using a second extended Kalman filter (20) different from the first extended Kalman filter (18) from the defined position and width of the object (12) in the image (10), wherein the first extended Kalman filter (18) uses a transition matrix based on a motion model in which the movements of the preceding vehicle and the own vehicle are modeled as circular movement, and the second extended Kalman filter (20) uses a transition matrix based on a motion model having linear movement equations; and
d) object detection using the Adaboost cascade method is again performed in a subsequently taken image (10) independent of a previous image (10), **characterized in that**

in addition, an already detected object (12) is monitored using optical tracking in form of a Lucas Kanade algorithm across a plurality of images (10) **in that** a translation (tx, ty) and a scaling (S) between the current image (10) and a plurality of previous images are calculated using significant points in the image (10) and used for converting a bounding box (14d) from the respective previous image to the current image (10);
a third mean value and a third covariance matrix for the current state of the preceding vehicle are estimated using a third extended Kalman filter (24), identical to the first extended Kalman filter (18), from the position ($p_{ix}$, $p_{iy}$) and width ($p_{ib}$) of the object (12) monitored using optical tracking; and
the first, second and third mean values and the first, second and third covariance matrices are probability weighted combined, respectively, using an interacting multi-model filter (22) to form a combined mean value and a combined covariance matrix for the current state of the preceding vehicle.

**2.** Method according to claim 1,
**characterized in that**
the first extended Kalman filter (18) uses non-linear transition and observation matrices and the second extended Kalman filter (20) uses a linear transition matrix and a non-linear observation matrix.

**3.** Method according to one of the preceding claims,
**characterized in that**
the Kalman filters (18, 20) estimate at least the position of the preceding vehicle in a ground plane in world coordinates, the speed of the preceding vehicle in the ground plane, the angle difference between the directions of travel of the preceding vehicle and the own vehicle, the angular speed of the preceding vehicle and the angle between the optical axis of the camera and the ground plane.

**4.** Method according to one of the preceding claims,

**characterized in that**
the position of the preceding vehicle is determined from an assumed width ($w_b$) of the preceding vehicle and the position ($p_{ix}$, $p_{iy}$) and width ($P_{ib}$) of the corresponding object (12) in the image (10).

**5.** Method according to claim 6,
**characterized in that**
the assumed width ($w_b$) of the preceding vehicle is determined by classifying the object (12).

**6.** Method according to claim 7,
**characterized in that**
the classification is performed by pattern recognition and/or matching of the object (12) to pattern objects stored in an object database.

**7.** Method according to claim 7 or 8,
**characterized in that**
the classification is performed by mapping the object (12) to one of at least two predetermined classes using a respective affiliation probability.

**8.** Method according to claim 9,
**characterized in that**
the assumed width ($w_b$) of the preceding vehicle is the sum of the products of the average vehicle width associated with a class and the respective affiliation probability.

**9.** Vehicle with a camera oriented in the direction of travel for taking images (10) of a vehicle environment in front of the vehicle in the direction of travel and a unit for evaluating the images (10) taken by the camera (10), wherein the evaluation unit is adapted to execute the method according to one of the preceding claims.

**Revendications**

**1.** Procédé de poursuite d'objet pour un système d'assistance de conducteur basé sur une caméra, qui comprend une caméra installée dans un propre véhicule automobile et orientée en direction de conduite, pour enregistrer des images (10) d'un environnement du véhicule automobile qui se trouve devant le propre véhicule automobile, comprenant les étapes consistant à

a) au moyen d'une procédure "Adaboost-cascade", on détecte (200) un objet représentant un véhicule automobile précédent (12) dans une image (10) enregistrée par la caméra, de sorte que l'on définit un point de pied ($p_{ix}$, $p_{iy}$) et une largeur ($p_{ib}$) d'une boîte enveloppe("Bounding Box") (14) englobant l'objet détecté (12) dans l'image (10) à titre de position et de largeur (12) de l'objet (12) dans l'image (10) ;
b) on estime (300) une première valeur moyenne et une première matrice de covariance pour l'état actuel du véhicule précédent, au moyen d'un premier filtre de Kalman étendu (18) à partir de la position et de la largeur définies de l'objet (12) dans l'image (10) ;
c) on estime (300) en supplément une seconde valeur moyenne et une seconde matrice de covariance pour l'état actuel du véhicule précédent, au moyen d'un second filtre de Kalman étendu (20) différent du premier filtre de Kalman étendu (18) à partir de la position et de la largeur définie de l'objet (12) dans l'image (10), dans lequel le premier filtre de Kalman étendu (18) fonctionne avec une matrice de transition qui est basée sur un modèle de déplacement dans lequel les déplacements du véhicule précédent et du propre véhicule sont modélisés sous forme de mouvements circulaires, et le second filtre de Kalman étendu (20) fonctionne avec une matrice de transition qui est basée sur un modèle de déplacement avec des équations de déplacement linéaires ; et
d) la détection d'objet au moyen de la procédure "Adaboost-cascade" est exécutée à nouveau, indépendamment d'une image précédente (10), dans une image enregistrée ensuite (10),

**caractérisé en ce que**
on poursuit en supplément un objet une fois détecté (12) au moyen d'un suivi optique sous la forme d'un algorithme de Lukas-Kanade sur plusieurs images (10) en calculant, à partir de points significatifs dans l'image (10), une translation ($t_x$, $t_y$) et un facteur d'échelle (S) entre l'image actuelle (10) et plusieurs images précédentes, et on les utilise pour recalculer une boîte enveloppe (14d) depuis l'image respectivement précédente vers l'image actuelle

EP 2 562 681 B1

(10) ;
on estime une troisième valeur moyenne et une troisième matrice de covariance pour l'état actuel du véhicule précédent au moyen d'un troisième filtre de Kalman étendu (24), qui est identique au premier filtre de Kalman étendu (18), à partir de la position ($p_{ix}$, $p_{iy}$) et de la largeur ($p_{ib}$) de l'objet poursuivi (12) au moyen du suivi optique ; et on combine la première, la seconde et la troisième valeur moyenne ainsi que la première, la seconde et la troisième matrice de covariance au moyen d'un filtre à multiple modèle (22) en interaction, les unes avec les autres respectivement avec pondération de probabilité, afin de former une valeur moyenne combinée et une matrice de covariance combinée pour l'état actuel du véhicule précédent.

2. Procédé selon la revendication 1,
**caractérisé en ce que** le premier filtre de Kalman étendu (18) utilise des matrices de transition et d'observation non linéaires, et le second filtre de Kalman étendu (20) utilise une matrice de transition linéaire et une matrice d'observation non linéaire.

3. Procédé selon l'une des revendications précédentes,
**caractérisé en ce que** les filtres de Kalman (18, 20) estiment au moins la position du véhicule précédent dans un plan au sol en coordonnées mondiales, la vitesse du véhicule précédent dans le plan au sol, la différence angulaire entre les directions de circulation du véhicule précédent et du véhicule propre, la vitesse angulaire du véhicule précédent et l'angle entre l'axe optique de la caméra et le plan au sol.

4. Procédé selon l'une des revendications précédentes,
**caractérisé en ce que** l'on détermine la position du véhicule précédent à partir d'une largeur supposée ($w_b$) du véhicule précédent ainsi que de la position ($p_{ix}$, $p_{iy}$) et de la largeur ($p_{ib}$) de l'objet correspondant (12) dans l'image (10).

5. Procédé selon la revendication 6,
**caractérisé en ce que** la largeur supposée ($w_b$) du véhicule précédent est déterminée par classification de l'objet (12).

6. Procédé selon la revendication 7,
**caractérisé en ce que** la classification a lieu par reconnaissance de modèle et/ou par comparaison de l'objet (12) avec des objets modèles, qui sont déposés dans une base de données d'objets.

7. Procédé selon la revendication 7 ou 8,
**caractérisé en ce que** la classification a lieu par association de l'objet (12) à une classe parmi au moins deux classes prédéterminées, avec une probabilité d'appartenance respective.

8. Procédé selon la revendication 9,
**caractérisé en ce que** la largeur supposée ($w_b$) du véhicule précédent est la somme des produits de la largeur de véhicule moyenne associée à une classe et de la probabilité d'appartenance respective.

9. Véhicule comprenant une caméra orientée en direction de circulation pour l'enregistrement d'images (10) d'un environnement du véhicule situé devant le véhicule en direction de circulation, et une unité pour évaluer les images (10) enregistrées par la caméra, dans lequel l'unité d'évaluation est organisée pour mettre en oeuvre le procédé selon l'une des revendications précédentes.

Fig. 1

$\sim$ 100

$\sim$ 200

$Y_K$

$\sim$ 400

18    20    $\sim$ 300

22    $\sim$ 500

$X_K$

Fig. 2

14 $\sim$

12

10 $\sim$

16

Fig. 3

Fig. 4

$14p$

$14p$

$14e$

$14d$

$14d$

$14d$

$14p$

S,tx,ty

S,tx,ty

S,tx,ty

T-3

T-2

T-1

T

EP 2 562 681 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **WEISS et al.** Multiple-model tracking for the detection of lane change maneuvers. *Intelligent Vehicles Symposium, Parma, Italy,* 14. Juni 2004, ISBN 978-0-7803-8310-4, 937-942
- **WEISS et al.** Target modeling and dynamic classification for adaptive sensor data fusion. *Intelligent Vehicles Symposium, Piscataway, NJ, USA,* 09. Juni 2003, ISBN 978-0-7803-7848-3, 132-137
- **YONG-SHIK KIM et al.** An IMM Algorithm for Tracking Maneuvering Vehicles in an Adaptive Cruise Control Environment. *International Journal of Control, Automation and Systems,* 01. September 2004, 310-318, http://ijcas.com/admin/paper/files/IJCAS_v2_n3_pp310-318.pdf

- **AMDITIS et al.** Multiple sensor collision avoidance system for automotive applications using an IMM approach for obstacle tracking. *Proceedings of the fifth international conference on information fusion,* 08. Juli 2002, vol. 2, ISBN 978-0-9721844-1-0, 812-817
- **ARIS POLYCHRONOPOULOS et al.** Centralized data fusion for obstacle and road borders tracking in a collision warning system. *Proc. Int. Conf. Inf. Fusion,* 01. Juni 2004, http://www.fusion2004.foi.se/papers/IF04-0760.pdf